# EUROPEAN PATENT APPLICATION

(11) **EP 4 755 968 A1**
(43) Date of publication of application: **10.06.2026**
(21) Application number: 24849268.8
(22) Date of filing: 01.08.2024
(51) Int. Cl.: C08L 21/00, B60C 1/00, C08K 3/04, C08K 3/22, C08K 5/18, C08K 5/3437, C08L 7/00, C08L 9/00

(54) **RUBBER COMPOSITION, SIDE RUBBER, AND TIRE**

(30) Priority: 02.08.2023 JP 2023126564
(71) Applicant: BRIDGESTONE CORPORATION, Chuo-ku Tokyo 104-8340 (JP)
(72) Inventor: SUZUKI, Yoshihiko, Tokyo 104-8340 (JP)
(74) Representative: Marks & Clerk LLP
(86) International application number: PCT/JP2024/027617
(87) International publication number: WO 2025/028623

(57) **Abstract**

With the aim of providing a rubber composition that is capable of increasing the ratio of sustainable materials in rubber products and improving elongation at break (EB) after thermal aging, a rubber composition contains a rubber component (A), recovered carbon black (B), a quinoline-based antioxidant (C), and zinc oxide (D), wherein a mass ratio "zinc oxide (D)/quinoline-based antioxidant (C)" of the zinc oxide (D) to the quinoline-based antioxidant (C) is more than 0 and not more than 1.8.

## Description

### TECHNICAL FIELD

The present disclosure relates to a rubber composition, side rubber, and a tire.

### BACKGROUND

Conventionally, various rubber compositions have been used in rubber products such as tires, rubber crawlers, and seismic isolation rubber. In order to ensure the strength of these rubber products, carbon black is usually blended as a reinforcing filler in the rubber composition that serves as the raw material.

Meanwhile, in recent years, from the perspective of social sustainability, it has been required to use so-called sustainable materials in rubber products, such as materials derived from biological resources (biomass resources) or recycled resources, and it is also required to increase the ratio of sustainable materials in rubber compositions applied to such rubber products. For example, as for carbon black, recovered carbon black is known as a material derived from recycled resources (see PTL 1).

### CITATION LIST

### Patent Literature

PTL 1: EP 3427975 A1

### SUMMARY

### (Technical Problem)

However, when recovered carbon black is used as a reinforcing filler in place of unused carbon black in order to increase the ratio of sustainable materials in rubber products, there is a problem in that the elongation at break (EB) after thermal aging of the rubber composition decreases, and the durability after thermal aging of the rubber product to which the rubber composition is applied also decreases. In particular, side rubber applied to the sidewall portion of a tire becomes hot during running, and high durability is required even after thermal aging, so it is necessary to achieve both an increase in the ratio of sustainable materials and an improvement in durability after thermal aging.

Therefore, the present disclosure addresses the above-described problems of the prior art, and an object thereof is to provide a rubber composition that is capable of increasing the ratio of sustainable materials in rubber products and improving elongation at break (EB) after thermal aging.

Further, another object of the present disclosure is to provide side rubber and a tire in which the ratio of sustainable materials is increased and durability after thermal aging is improved.

### (Solution to Problem)

The gist configuration of the rubber composition, side rubber, and tire of the present disclosure that solves the above problems is as follows.
[1] A rubber composition comprising a rubber component (A), recovered carbon black (B), a quinoline-based antioxidant (C), and zinc oxide (D), wherein a mass ratio "zinc oxide (D)/quinoline-based antioxidant (C)" of the zinc oxide (D) to the quinoline-based antioxidant (C) is more than 0 and not more than 1.8.
[2] The rubber composition according to [1], wherein the recovered carbon black (B) is obtained by pyrolysis of a vulcanized rubber product containing carbon black.
[3] The rubber composition according to [1] or [2], wherein the recovered carbon black (B) has an ash content of not more than 20 mass%.
[4] The rubber composition according to any one of [1] to [3], further comprising carbon black (E) other than the recovered carbon black.
[5] The rubber composition according to [4], wherein a proportion of the recovered carbon black (B) in a total amount of the recovered carbon black (B) and the carbon black (E) other than the recovered carbon black is 5 mass% to 21 mass%.
[6] The rubber composition according to [4] or [5], wherein the carbon black (E) other than the recovered carbon black has a dibutyl phthalate (DBP) oil absorption of 50 mL/100 g to 150 mL/100 g and a nitrogen adsorption specific surface area (N₂SA) of 20 m²/g to 130 m²/g.
[7] The rubber composition according to any one of [1] to [6], wherein the rubber component (A) includes natural rubber.
[8] The rubber composition according to [7], wherein the rubber component (A) further includes butadiene rubber.
[9] The rubber composition according to any one of [1] to [8], wherein content of the zinc oxide (D) is not more than 4 parts by mass per 100 parts by mass of the rubber component (A).
[10] The rubber composition according to any one of [1] to [9], further comprising an antioxidant (F) other than the quinoline-based antioxidant.
[11] The rubber composition according to [10], wherein the antioxidant (F) other than the quinoline-based antioxidant is a phenylenediamine-based antioxidant.
[12] The rubber composition according to [10] or [11], wherein a mass ratio "zinc oxide (D)/total amount of antioxidants" of the zinc oxide (D) to a total amount of the quinoline-based antioxidant (C) and the antioxidant (F) other than the quinoline-based antioxidant is more than 0 and not more than 0.55.
[13] A side rubber comprising the rubber composition according to any one of [1] to [12].
[14] A tire comprising the side rubber according to [13].

### (Advantageous Effect)

According to the present disclosure, it is possible to provide a rubber composition that is capable of increasing the ratio of sustainable materials in rubber products and improving elongation at break (EB) after thermal aging.

Further, according to the present disclosure, it is possible to provide side rubber and a tire in which the ratio of sustainable materials is increased and durability after thermal aging is improved.

### BRIEF DESCRIPTION OF THE DRAWINGS

In the accompanying drawings:

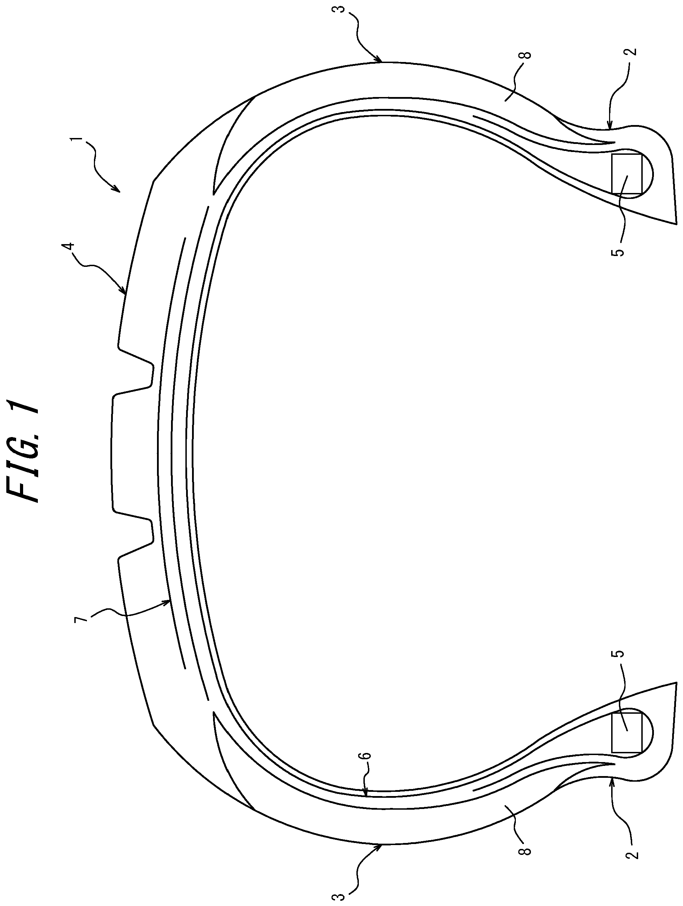

FIG. 1 is a cross-sectional view illustrating one embodiment of a tire of the present disclosure.

### DETAILED DESCRIPTION

Hereinafter, the rubber composition, side rubber, and tire of the present disclosure will be exemplified and described in detail based on embodiments thereof.

### <Definitions>

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

In the present specification, the "ratio of sustainable materials" refers to the total mass ratio of materials derived from biological resources (biomass resources) and materials derived from recycled resources in the target rubber composition, side rubber, and tire.

In the present specification, the aforementioned biological resources (biomass resources) refer to carbon-neutral organic resources of biological origin, and include, for example, those stored in the form of starch or cellulose, the bodies of animals that grow by eating plants, products obtained by processing plants or animals, and the like, and exclude fossil resources (petroleum, coal, natural gas, etc.). The biological resources may be edible or non-edible, but from the viewpoint of not competing with food and effective utilization of resources, non-edible resources are preferred.

Specific examples of the aforementioned biological resources include, for example, cellulosic crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, Cocos nucifera oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate crops (corn, wheat, rice, rice husk, rice bran, old rice, tubers, buckwheat, cassava, sago palm, sugarcane, etc.), bagasse (i.e., residue after juice extraction from sugarcane), soybeans, okara (soy pulp), essential oils (pine root oil, orange oil, eucalyptus oil, etc.), black liquor from pulp, algae, and the like. As the biological resources, processed products thereof (i.e., substances derived from biological resources) may also be used. Examples of processing methods include, for example, biological processing methods utilizing the action of microorganisms, plants, animals, or their tissue cultures; chemical processing methods utilizing acids, alkalis, catalysts, thermal energy, light energy, etc.; physical processing methods such as micronization, compression, microwave treatment, electromagnetic wave treatment, and the like. Further, as the biological resources, substances extracted or purified from the aforementioned biological resources or processed biological resources (i.e., substances derived from biological resources) may also be used. For example, sugars, proteins, amino acids, fatty acids, fatty acid esters, etc., purified from the aforementioned biological resources may also be used. Examples of the sugars include sucrose, glucose, trehalose, fructose, lactose, galactose, xylose, allose, talose, gulose, altrose, mannose, idose, arabinose, apiose, maltose, cellulose, starch, chitin, etc., derived from biological resources. Examples of the proteins include compounds derived from biological resources in which amino acids (preferably L-amino acids) are linked, and oligopeptides such as dipeptides are also included. Examples of the amino acids include valine, leucine, isoleucine, arginine, lysine, asparagine, glutamine, phenylalanine, etc., derived from biological resources, among which valine, leucine, isoleucine, arginine, and phenylalanine are preferred. The amino acids may be L-amino acids or D-amino acids, but from the viewpoint of abundance in nature and ease of availability, L-amino acids are preferred. Examples of the fatty acids include butyric acid, palmitic acid, stearic acid, oleic acid, linoleic acid, linolenic acid, etc., derived from biological resources. Examples of the fatty acid esters include modified products of fats and oils such as vegetable oils and animal oils derived from biological resources. Various materials and impurities may be mixed in these biological resources.

In the present specification, the aforementioned recycled resources refer to resources obtained by recycling (reprocessing) products that have been used once, collected without being used, or discarded. For example, as recycled resources, resources obtained by recycling (reprocessing) used rubber products such as used tires can be mentioned.

### <Rubber Composition>

The rubber composition of the present embodiment comprises a rubber component (A), recovered carbon black (B), a quinoline-based antioxidant (C), and zinc oxide (D). In the rubber composition of the present embodiment, the mass ratio "zinc oxide (D)/quinoline-based antioxidant (C)" of the zinc oxide (D) to the quinoline-based antioxidant (C) is more than 0 and not more than 1.8.

In the rubber composition of the present embodiment, since the recovered carbon black (B) is a material derived from recycled resources, by compounding the recovered carbon black (B) in the rubber composition, it is possible to increase the ratio of sustainable materials in rubber products to which the rubber composition is applied.

However, as described above, when recovered carbon black is compounded in place of ordinary unused carbon black, there is a problem that the elongation at break (EB) after thermal aging of the rubber composition decreases.

To address this problem, in the rubber composition of the present embodiment, a quinoline-based antioxidant (C) and zinc oxide (D) are compounded. Here, the quinoline-based antioxidant (C) has the effect of improving the heat aging resistance of the rubber composition, while zinc oxide (D) facilitates vulcanization of the rubber composition, but if present in excessive amounts, tends to decrease the heat aging resistance of the rubber composition. Therefore, in the rubber composition of the present embodiment, by increasing the content of the quinoline-based antioxidant (C) and reducing the content of zinc oxide (D) so that the mass ratio "zinc oxide (D)/quinoline-based antioxidant (C)" is not more than 1.8, the elongation at break (EB) after thermal aging can be improved.

Accordingly, the rubber composition of the present embodiment is capable of increasing the ratio of sustainable materials in rubber products, and also exhibits improved elongation at break (EB) after thermal aging.

### (Rubber Component (A))

The rubber composition of the present embodiment contains a rubber component (A), which imparts rubber elasticity to the composition. The rubber component (A) preferably has a sustainable ratio of 30 mass% or more, more preferably 40 mass% or more, still more preferably 50 mass% or more, even more preferably 60 mass% or more, yet more preferably 70 mass% or more, further preferably 80 mass% or more, still more preferably 90 mass% or more, and particularly preferably 100 mass%.

Here, the "sustainable ratio" of the rubber component (A) refers to the total mass ratio of components derived from biological resources (biomass resources) and components derived from recycled resources in the rubber component (A).

As the rubber component (A), rubber derived from biological resources and rubber derived from recycled resources are preferred.

Here, the proportion of monomer components derived from biological resources in 100 mol% of the monomer components constituting the rubber derived from biological resources is preferably 50 mol% or more, more preferably 70 mol% or more, still more preferably 80 mol% or more, yet more preferably 90 mol% or more, particularly preferably 95 mol% or more, and may be 100 mol%.

Further, the proportion of monomer components derived from recycled resources in 100 mol% of the monomer components constituting the rubber derived from recycled resources is preferably 50 mol% or more, more preferably 70 mol% or more, still more preferably 80 mol% or more, yet more preferably 90 mol% or more, particularly preferably 95 mol% or more, and may be 100 mol%.

The rubber component (A) is a component that contributes to crosslinking, and usually has a weight-average molecular weight (Mw) of 10,000 or more, preferably 50,000 or more, more preferably 150,000 or more, still more preferably 200,000 or more, and preferably 5,000,000 or less, more preferably 2,000,000 or less, still more preferably 1,500,000 or less, and even more preferably 1,300,000 or less.

Note that, in the present specification, the weight-average molecular weight (Mw) of the rubber component (A) can be determined, for example, by conversion to standard polystyrene based on measurement values obtained by gel permeation chromatography (GPC) (GPC-8000 series manufactured by Tosoh Corporation, detector: differential refractometer, column: TSKGEL SUPERMULTIPORE HZ-M manufactured by Tosoh Corporation).

As the rubber component (A), diene-based rubber is preferred, and as the diene-based rubber, isoprene-based rubber and butadiene-based rubber are preferred. Here, isoprene-based rubber refers to rubber containing units derived from isoprene as monomer units, and butadiene-based rubber refers to rubber containing units derived from butadiene as monomer units.

Examples of the isoprene-based rubber include natural rubber (NR), synthetic isoprene rubber (IR), upgraded natural rubber (upgraded NR), modified natural rubber (modified NR), and modified synthetic isoprene rubber (modified IR). As the natural rubber (NR), for example, RSS #3, TSR20 (for example, SIR20 or STR20), and the like, which are commonly used in the tire industry, can be used. The origin of the natural rubber (NR) is not particularly limited, and examples include those derived from the Para rubber tree, guayule, Russian dandelion, and the like. As the synthetic isoprene rubber (IR), it is not particularly limited, and for example, IR2200 and the like, which are commonly used in the tire industry, can be used. Examples of the upgraded NR include deproteinized natural rubber (DPNR), high-purity natural rubber (UPNR), and the like. Examples of the modified NR include epoxidized natural rubber (ENR), hydrogenated natural rubber (HNR), grafted natural rubber, and the like. Examples of the modified IR include epoxidized synthetic isoprene rubber, hydrogenated synthetic isoprene rubber, grafted synthetic isoprene rubber, and the like. These isoprene-based rubbers may be used alone or in combination of two or more. Among these, NR is preferred as the isoprene-based rubber.

The isoprene-based rubber preferably has a sustainable ratio of 30 mass% or more, more preferably 40 mass% or more, still more preferably 50 mass% or more, even more preferably 60 mass% or more, yet more preferably 70 mass% or more, further preferably 80 mass% or more, still more preferably 90 mass% or more, and particularly preferably 100 mass%.

To set the sustainable ratio of the isoprene-based rubber within the above range, it is preferred to use natural rubber (NR), or to use a polymer synthesized using isoprene derived from biological resources or isoprene derived from recycled resources as the monomer component. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum).

The rubber component (A) preferably contains natural rubber (NR). By including natural rubber in the rubber component (A), it is possible to further increase the ratio of sustainable materials, and also to enhance the fracture strength of the rubber composition. As a result, both the ratio of sustainable materials and the durability of rubber products using the rubber composition can be further improved.

Examples of the butadiene-based rubber include butadiene rubber (BR), aromatic vinyl compound-butadiene copolymer rubber (for example, styrene-butadiene rubber (SBR)), and the like. Here, the butadiene used as a raw material for the butadiene-based rubber is preferably derived from biological resources or recycled resources.

Examples of the butadiene rubber (BR) include high-cis butadiene rubber, low-cis butadiene rubber, butadiene rubber containing syndiotactic polybutadiene crystals, and the like. Commercial products can be used as the butadiene rubber (BR), and examples of such commercial products include those manufactured by UBE Elastomer Co., Ltd., ENEOS Materials Corporation, Asahi Kasei Corporation, Zeon Corporation, and the like. These butadiene rubbers may be used alone or in combination of two or more.

Examples of the aromatic vinyl compound-butadiene copolymer rubber (for example, SBR) include emulsion-polymerized aromatic vinyl compound-butadiene copolymer rubber (for example, emulsion-polymerized styrene-butadiene rubber (E-SBR)), solution-polymerized aromatic vinyl compound-butadiene copolymer rubber (for example, solution-polymerized styrene-butadiene rubber (S-SBR)), and the like. In the aromatic vinyl compound-butadiene copolymer rubber, examples of the aromatic vinyl compound (aromatic vinyl monomer) include styrene, vinyl naphthalene, divinyl naphthalene, and the like. These aromatic vinyl compounds may be used alone or in combination of two or more. Among these, styrene is preferred, and styrene derived from biological resources and styrene derived from recycled resources are particularly preferred. That is, SBR is preferred as the aromatic vinyl compound-butadiene copolymer rubber. The styrene may have a substituent. Commercial products can be used as the aromatic vinyl compound-butadiene copolymer rubber, and examples of such commercial products include those manufactured by Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more.

The butadiene-based rubber preferably has a sustainable ratio of 30 mass% or more, more preferably 40 mass% or more, still more preferably 50 mass% or more, even more preferably 60 mass% or more, yet more preferably 70 mass% or more, further preferably 80 mass% or more, still more preferably 90 mass% or more, and particularly preferably 100 mass%.

To set the sustainable ratio of the butadiene-based rubber within the above range, for example, it is sufficient to use a polymer synthesized using butadiene derived from biological resources, butadiene derived from recycled resources, aromatic vinyl compounds derived from biological resources (for example, styrene derived from biological resources), or aromatic vinyl compounds derived from recycled resources (for example, styrene derived from recycled resources) as monomer components. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum). Note that, in the butadiene rubber (B-BR) derived from biological resources (biomass resources) and the aromatic vinyl compound-butadiene copolymer rubber derived from biological resources (for example, styrene-butadiene rubber (B-SBR) derived from biological resources (biomass resources)), not only rubber obtained by polymerizing butadiene, etc., by conventional methods, but also rubber obtained by reactions or enzyme reactions using microorganisms, plants, animals, or their tissue cultures (hereinafter also referred to as "microorganisms, etc.") are included.

The rubber component (A) preferably contains butadiene rubber (BR). Butadiene rubber can improve physical properties such as elongation at break (EB) of the rubber composition.

Further, it is particularly preferred that the rubber component (A) contains, in addition to natural rubber (NR), butadiene rubber (BR). By using both natural rubber and butadiene rubber as the rubber component (A), the elongation at break (EB) after thermal aging of the rubber composition can be further improved.

Further, to set the overall sustainable ratio of the rubber component (A) within the above range, it is preferred to use natural rubber (NR) as the rubber component (A), or to use a polymer synthesized using monomer components derived from biological resources or monomer components derived from recycled resources as the monomer components.

In general, materials for rubber compositions for tires (rubber and its monomers, fillers, resins, etc.) require large-scale manufacturing equipment for their production, and are therefore usually produced at large factories in specific regions, necessitating significant energy for the storage and transportation of raw materials and products. In contrast, materials derived from biological resources (biomass resources) originate from agricultural products, forests, and the like in each region, and can also be produced on a small scale through microbial fermentation or catalytic reactions. Therefore, by utilizing local products and waste, it is possible to reduce the energy required for the transportation and storage of raw materials, and furthermore, to reduce the energy required for the transportation and storage of the manufactured materials to tire factories, thereby being environmentally friendly. In addition, materials derived from recycled resources can be obtained, for example, by dismantling and pyrolyzing used tires to extract materials constituting the tire, such as rubber, fillers, steel cords, and the like. Furthermore, sulfur can be obtained from biological resources or processed products thereof by a method including a desulfurization step for removing sulfur-containing substances from the biological resource or processed product thereof by desulfurization, a recovery step for recovering sulfur from the desulfurization treatment residue generated in the desulfurization step, and a processing step for processing the recovered sulfur into sulfur for vulcanization (for example, the method described in Japanese Patent Application No. 2022-140390), thereby enabling the acquisition of sulfur from biological resources or processed products thereof, and enabling the acquisition of materials for rubber compositions for tires from various wastes and used articles. In this way, by using sustainable materials (materials derived from biological resources or recycled resources), it is possible to comprehensively reduce the environmental burden in tire manufacturing, such as reduction of life cycle CO₂ emissions (LCCO2), reduction of life cycle energy consumption (LCE), reduction of life cycle cost (LCC), and reduction of fossil resource usage.

Furthermore, when manufacturing the rubber composition, the ratio of monomer components derived from biological resources, monomer components derived from recycled resources, and monomer components derived from fossil resources (for example, monomer components derived from fossil resources) can be appropriately selected according to the supply situation of biological resources, recycled resources, and fossil resources, and/or market demands (for example, demand for biological resources as food), and by polymerizing monomer components derived from biological resources, monomer components derived from recycled resources, and monomer components derived from fossil resources, it is possible to obtain rubber derived from sustainable materials (materials derived from biological resources or recycled resources) having performance equivalent to that of conventional synthetic rubber. Note that, when using monomer components derived from recycled resources, it may be difficult to separate them from monomer components derived from fossil resources due to reasons in the manufacturing process of the monomer. In such cases, the environmental impact can be evaluated by adopting the concept of mass balance.

The ratio of each monomer unit (for example, units derived from isoprene, units derived from butadiene, units derived from aromatic vinyl compounds) in the entire rubber component (A) can be appropriately adjusted according to the member to which it is applied. The ratio of each monomer unit in the entire rubber component (A) can be adjusted, for example, by appropriately combining the above-described isoprene-based rubber and butadiene-based rubber. In addition, the ratio of cis-bond units among the units derived from butadiene can also be appropriately adjusted according to the member to which it is applied.

In the present specification, the term "monomer unit" means a structural unit of a polymer, "unit derived from isoprene" means a structural unit in a polymer constructed based on isoprene as a monomer (including isoprene units in natural rubber), "unit derived from butadiene" means a structural unit in a polymer constructed based on butadiene as a monomer, and "unit derived from aromatic vinyl compound" means a structural unit in a polymer constructed based on an aromatic vinyl compound as a monomer.

In the present specification, the ratio of each monomer unit is measured by NMR.

The rubber component (A) may include, in addition to the above-described isoprene-based rubber, butadiene rubber (BR), and aromatic vinyl compound-butadiene copolymer rubber (for example, SBR), diene-based rubbers such as acrylonitrile-butadiene rubber (NBR), chloroprene rubber (CR), butyl rubber (IIR), and styrene-isoprene-butadiene copolymer rubber (SIBR). These rubber components may be used alone or in combination of two or more. However, in the rubber composition of the present embodiment, it is preferable that the total styrene content in the rubber component (A) is 5 mass% or less, more preferably 3 mass% or less, and may even be 0 mass%. If the total styrene content in the rubber component (A) exceeds 5 mass%, the physical properties of the rubber composition deteriorate, and it becomes impossible to sufficiently improve the elongation at break (EB) after thermal aging.

The rubber component (A) may be modified to introduce functional groups that interact with fillers such as carbon black and silica. Examples of such functional groups include amino groups, amide groups, isocyanate groups, imino groups, imidazole groups, urea groups, ammonium groups, imide groups, hydrazo groups, azo groups, diazo groups, carboxyl groups, nitrile groups, pyridyl groups, alkoxy groups, hydroxyl groups, oxy groups, epoxy groups, ether groups, carbonyl groups, oxycarbonyl groups, silyl groups, alkoxy silyl groups, mercapto groups, sulfide groups, disulfide groups, sulfonyl groups, sulfinyl groups, thiocarbonyl groups, and the like, and these functional groups may have substituents. These functional groups may be introduced into the rubber component singly or in combination of two or more. Among these, amino groups, alkoxy groups, and alkoxy silyl groups are preferred, and substituted amino groups in which a hydrogen atom of the amino group is substituted with an alkyl group having 1 to 6 carbon atoms, alkoxy groups having 1 to 6 carbon atoms, and alkoxy silyl groups having 1 to 6 carbon atoms are more preferred.

The above functional groups can be introduced, for example, by reacting a compound (modifier) having the functional group with the rubber component (A). The functional group is a modified functional group having interaction with fillers such as silica and carbon black, and examples include nitrogen-containing functional groups, silicon-containing functional groups, and oxygen-containing functional groups. Examples of compounds (modifiers) having nitrogen-containing functional groups include amino group-containing compounds; examples of compounds (modifiers) having silicon-containing functional groups include silicon halides and hydrocarbyloxy silane compounds; and examples of compounds (modifiers) having oxygen-containing functional groups include alkoxy group-containing compounds, alkylene oxide group-containing compounds, and trialkylsilyloxy group-containing compounds. More specifically, compounds described in International Publication No. 2016/194316 and International Publication No. 2019/117256 can be mentioned. These modifiers may be used alone or in combination of two or more.

Rubber derived from the above sustainable materials (materials derived from biological resources or recycled resources) can be produced, for example, by using monomer components derived from biological resources or monomer components derived from recycled resources, and, if necessary, monomer components derived from fossil resources, in the same manner as the conventional method for producing synthetic rubber derived from fossil resources. In addition, the rubber derived from sustainable materials (particularly, rubber derived from biological resources) can also be obtained by reactions using microorganisms or by enzymatic reactions.

As a method for preparing rubber derived from biological resources from the above biological resources, for example, the method described in JP 2022-179158 A can be used. For example, by using butadiene obtained from biological resources as a monomer component, butadiene rubber derived from biological resources (B-BR) can be obtained, and by using styrene obtained from biological resources and butadiene obtained from biological resources as monomer components, styrene-butadiene rubber derived from biological resources (B-SBR) can be obtained. Here, as methods for obtaining B-BR and B-SBR from biological resources, in addition to artificial polymerization, methods such as polymerization in vivo and polymerization using bio-derived enzymes can be mentioned. The molecular weight, branching, microstructure, and the like of the obtained B-BR and B-SBR can be appropriately adjusted by changing the polymerization conditions according to the desired tire performance in accordance with known methods.

As butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may be used in combination of two or more.

As styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar styraciflua, Styrax japonicus, or Catharanthus roseus), and styrene obtained from microorganisms (preferably microorganisms belonging to the Penicillium or Escherichia genera, more preferably P. citrinum or transformed E. coli) can be suitably used. These styrenes may also be used in combination of two or more.

Recently, biomass complexes centered on bioethanol and bioethylene are being planned, but bioethanol and bioethylene are produced mainly using saccharides and/or cellulose as biological resources, and cannot effectively utilize other biological resources such as proteins, lipids, and amino acids. Furthermore, saccharides compete with food, and excessive use of cellulose leads to deforestation. Therefore, in addition to the supply situation of various biological resources, the supply situation of recycled resources, the supply situation of fossil resources, and market demands (for example, demand for biomass resources as food), it is preferable to use a plurality of types of monomer components derived from biological resources as the monomer components derived from biological resources, or to use monomer components derived from biological resources, monomer components derived from recycled resources, and monomer components derived from fossil resources in combination, and further to appropriately adjust the ratio of these monomer components for use. In this way, it is possible to effectively utilize a wide range of biological resources such as saccharides, proteins, and lipids, as well as recycled resources, without relying on a single type of biological resource, to stably supply rubber derived from sustainable materials, and furthermore, to take environmental considerations into account according to the situation during production.

When using a plurality of types of monomer components derived from biological resources, it is preferable to use monomer components derived from different biological resources, that is, monomer components obtained from different biological resources. Specifically, as butadiene derived from biological resources, it is preferable to use a mixture of a plurality of types of butadiene derived from different biological resources, and/or as styrene derived from biological resources, it is preferable to use a mixture of a plurality of types of styrene derived from different biological resources. In this way, it is possible to effectively utilize a plurality of types of biological resources.

### (Recovered Carbon Black (B))

The rubber composition of the present embodiment contains recovered carbon black (B). Since the recovered carbon black (B) is a material derived from recycled resources, by incorporating the recovered carbon black (B) into the rubber composition, it is possible to increase the proportion of sustainable materials in the rubber product to which the rubber composition is applied.

In the present specification, "recovered carbon black" refers to carbon black obtained by recovery from waste materials subjected to recycling. Examples of such waste materials include waste rubber, used tires, waste oil, and the like. Waste rubber refers to all discarded rubber, not limited to that generated from rubber products, but also including unnecessary scraps generated during the production or repair of rubber products. Examples of scraps include buffing dust and peeling rubber. Buffing dust is, for example, fine rubber generated in the buffing process of retreading tires, in which the tread portion remaining on the base tire is shaved off. Peeling rubber is, for example, long rubber strips with a width of about 1 to 2 cm, stripped from the surface of rubber products such as tires. Peeling rubber is generated by shaving the surface of rubber products such as tires using a knife with a U-shaped or V-shaped tip as a peeler. Waste rubber includes not only crosslinked rubber but also unvulcanized rubber. Rubber products include, for example, final products such as tires and rubber hoses, as well as rubber parts or components in the manufacturing stage of final products. Used tires may be those subjected to retreading, or may be waste tires generated by tire replacement, vehicle scrapping, or the like, or ELT (End-of-Life Tire) that has reached the end of its service life as a tire, or any other tires discarded for any reason. Waste oil is not limited to that generated by decomposing plastics or rubber, but also includes, for example, used oils discharged from industry, such as animal and vegetable oils, lubrication oil, insulating oil, cutting oil, and the like. Among these, as waste oil, those derived from silicone rubber, polyvinyl chloride, and the like, which do not contain components other than organic substances, are preferable. Also, as waste oil, those in which carbon black or rubber containing carbon black is mixed are preferable.

"Recovered carbon black" is different from carbon black directly produced from hydrocarbons such as petroleum, natural gas, or coal, that is, carbon black that is not recycled. Note that "used" here includes not only those actually used and then discarded, but also those manufactured but discarded without being actually used.

Furthermore, it is preferable that the recovered carbon black (B) is obtained by pyrolysis of a vulcanized rubber product containing carbon black. Recovered carbon black obtained by pyrolysis of a vulcanized rubber product containing carbon black is easily available because there are large quantities of vulcanized rubber products containing carbon black, and it can be easily obtained by pyrolysis. Furthermore, it is preferable that the recovered carbon black (B) is obtained from the solid residue generated by pyrolysis of the above vulcanized rubber product containing carbon black. When a rubber product containing carbon black is pyrolyzed, a solid residue and volatile components (oil) are obtained, and recovered carbon black can be recovered from either.

When recovering carbon black from the volatile components, it is possible to recover oil components with a specific gravity suitable for manufacturing carbon black and use them to manufacture carbon black by an existing carbon black manufacturing method (for example, Japanese Patent Publication No. 2015-520259). In this case, unlike carbon black recovered from solid residue, there are advantages such as the absence of impurities and no mixing of different grades. In addition, in the production of low environmental impact carbon black, there are various options such as using, in addition to oil obtained by recovering volatile components obtained by the above-mentioned rubber pyrolysis, vegetable oil, oil derived from waste plastics, and the like. However, edible resources such as vegetable oil have issues in securing sufficient quantities due to demand for other uses such as food, and it is also necessary to consider the environmental impact associated with the expansion of cultivated land. Also, oil derived from waste plastics and the like is also used for other purposes such as horizontal recycling of plastics, so there are also supply issues. On the other hand, when using volatile components (oil) generated by pyrolysis of vulcanized rubber products, especially tires, it is possible to continue using existing materials within the tire industry, thereby reducing the consumption of new materials in new tire production and contributing to the reduction of environmental burden as an industry. The grade of the above carbon black is not particularly limited, and examples include N134, N110, N220, N234, N219, N339, N330, N326, N351, N550, N762, and the like.

The solid residue obtained by pyrolyzing waste such as used rubber and used tires contains, in addition to carbon black, ash. The ash is derived from non-volatile components contained in the rubber or tire. Therefore, the recovered carbon black obtained from the solid residue has a relatively low content of carbon black. On the other hand, considering the various physical properties required for tires manufactured using recovered carbon black, the higher the carbon content in the recovered carbon black, the more preferable. In the recovered carbon black (B), the carbon content is preferably 80 mass% or more, more preferably 85 mass% or more, even more preferably 87 mass% or more, and still more preferably 89 mass% or more. The carbon content in the recovered carbon black (B) is preferably 97 mass% or less. Note that the above carbon content is a value excluding adsorbed moisture.

Specifically, the ash content includes zinc oxide, zinc sulfide, silica, iron compounds (iron oxide), calcium oxide, aluminum oxide, magnesium oxide, and the like. In the case of recovered carbon black produced from solid residue obtained by pyrolyzing waste, even if various processes for removing ash are performed, a certain amount of ash remains. In the present embodiment, it is permissible for the recovered carbon black (B) to contain ash. The lower limit of the ash content in the recovered carbon black (B) may be 0.5 mass%. On the other hand, considering the various physical properties required for tires and the quality of the recovered carbon black, it is preferable that the ash content in the recovered carbon black (B) is not more than 20 mass%, more preferably not more than 15 mass%, and even more preferably not more than 5.0 mass%. When the ash content in the recovered carbon black (B) is not more than 20 mass%, it is possible to improve the various physical properties of rubber products to which the rubber composition is applied.

Here, in the present specification, the ash content of carbon black is determined in accordance with ASTM D8474 and D1506.

The recovered carbon black (B) can be obtained from a pyrolysis process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550-800°C in the absence of oxygen, or by vacuum pyrolysis at relatively low temperatures ([0027]). As mentioned in [0004] of Japanese Patent No. 6856781, carbon black obtained from such a pyrolysis process generally lacks functional groups on its surface (Comparison of surface morphology and chemistry of pyrolytic carbon black and commercial carbon black, Powder Technology 160 (2005) 190-193).

The recovered carbon black (B) may lack functional groups on its surface, or may be treated to include functional groups on its surface. The treatment to include functional groups on the surface of recovered carbon black can be carried out by conventional methods. For example, European Patent Application Publication No. 3173251 describes obtaining carbon black containing hydroxyl and/or carboxyl groups on its surface by treating carbon black obtained from a pyrolysis process with potassium permanganate under acidic conditions. In addition, Japanese Patent No. 6856781 describes obtaining activated carbon black by treating carbon black obtained from a pyrolysis process with an amino acid compound containing at least one thiol group or disulfide group, thereby activating its surface. The recovered carbon black according to the present embodiment also includes such carbon black treated to include functional groups on its surface.

As the pyrolysis of crosslinked rubber products (vulcanized rubber products) such as used tires, for example, a pyrolysis method at a temperature of 650°C or higher can be mentioned.

Regarding the crosslinked rubber products used for the decomposition, it is possible to group them in advance according to the type of rubber component compounded, and then carry out the decomposition process for each group. Alternatively, it is possible to group them in advance according to the type of filler compounded (for example, type of carbon black, type of silica, mixing ratio of carbon black and silica, etc.), and then carry out the decomposition process for each group. Furthermore, it is also possible to perform both grouping by type of rubber component and grouping by type of filler, and then carry out the decomposition process for each group. When the decomposition process is performed for each group in this way, recovered carbon black with more uniform physical properties can be obtained, and when it is compounded again into a rubber component, a rubber composition with better performance can be obtained.

In addition, when the crosslinked rubber products used for the decomposition are derived from tires, it is possible to group them in advance by tire type (for example, for passenger vehicles, for trucks and buses, for large vehicles such as off-road vehicles, for aircraft, for agricultural vehicles, etc.), and then carry out the decomposition process for each group. Alternatively, it is possible to group them in advance by tire component (for example, tread rubber, sidewall rubber, bead portion rubber, steel cord coating rubber, organic fiber coating rubber, pad rubber, cushion rubber, etc.), and then carry out the decomposition process for each group. Furthermore, it is also possible to perform both grouping by tire type and grouping by tire component, and then carry out the decomposition process for each group. When the decomposition process is performed for each group in this way, recovered carbon black with more uniform physical properties can be obtained, and when it is compounded again into a rubber component, a rubber composition with better performance can be obtained.

The recovered carbon black (B) used in the present embodiment preferably has a nitrogen adsorption specific surface area (N₂SA) by the BET method of 40-100 m²/g, more preferably 50-90 m²/g, and particularly preferably 55-75 m²/g. The DBP oil absorption is preferably 70-120 mL/100 g, more preferably 75-110 mL/100 g, and particularly preferably 80-100 mL/100 g. The recovered carbon black in the present embodiment may be a commercially available product, and as such a commercial product, for example, the product name "PB365" manufactured by Enrestec Co., Ltd. can be mentioned. PB365 is a recovered carbon black produced through pyrolysis of used tires, and has an N₂SA by the BET method of 73.6 m²/g. In addition, PB365 contains about 17 mass% ash.

In the present specification, the nitrogen adsorption specific surface area (N₂SA) of carbon black by the BET method is the statistical thickness surface area (STSA), and is determined in accordance with ASTM D6556. In the present specification, the DBP oil absorption of carbon black is determined in accordance with ASTM D2414.

The recovered carbon black (B) preferably has a pH of 4-12, more preferably 5-11, and particularly preferably 6-10.

Here, in the present specification, the pH of recovered carbon black is determined in accordance with ASTM D1512.

The recovered carbon black (B) preferably has a toluene discoloration transmittance of 60% or more, more preferably 70% or more, and particularly preferably 80% or more.

Here, in the present specification, the toluene discoloration transmittance of recovered carbon black is determined in accordance with ASTM D1618.

The recovered carbon black (B) preferably has a heating loss at 125°C of not more than 3 mass%, more preferably not more than 2.5 mass%, and particularly preferably not more than 2 mass%.

Here, in the present specification, the heating loss at 125°C of recovered carbon black is determined in accordance with ASTM D1509.

The recovered carbon black (B) preferably has a sulfur content of not more than 5 mass%, more preferably not more than 3.5 mass%, and particularly preferably not more than 3 mass%.

The recovered carbon black (B) preferably has a 35-mesh sieve residue of not more than 20 mass ppm, more preferably not more than 15 mass ppm, and particularly preferably not more than 10 mass ppm.

Here, in the present specification, the 35-mesh sieve residue of recovered carbon black is determined in accordance with ASTM D1514.

The recovered carbon black (B) preferably has a 325-mesh (44 µm) sieve residue of not more than 1000 mass ppm, more preferably not more than 700 mass ppm, and particularly preferably not more than 300 mass ppm.

Here, in the present specification, the 325-mesh (44 µm) sieve residue of recovered carbon black is determined in accordance with ASTM D1514.

The recovered carbon black (B) preferably has a pellet hardness of not more than 100 cN, more preferably not more than 90 cN, and particularly preferably not more than 80 cN.

Here, in the present specification, the pellet hardness of recovered carbon black is determined in accordance with ASTM D5230.

The recovered carbon black (B) preferably has a pellet fines content of not more than 10 mass%, more preferably not more than 7 mass%, and particularly preferably not more than 5 mass%.

Here, in the present specification, the pellet fines content of recovered carbon black is determined in accordance with ASTM D1508.

The recovered carbon black (B) preferably has a particle size (D97) of not more than 25 µm, more preferably not more than 15 µm, and particularly preferably not more than 10 µm.

Here, in the present specification, the particle size (D97) of recovered carbon black is determined using a laser diffraction particle size distribution analyzer, with a refractive index of 1.33 for water and 1.75 for the filler.

The recovered carbon black (B) preferably has a proportion of particles of 5 µm or less of 50 vol% or more, more preferably 70 vol% or more, and particularly preferably 80 vol% or more.

The recovered carbon black (B) preferably has a compressed dibutyl phthalate (24M4DBP) absorption of 50-110 mL/100 g, more preferably 60-100 mL/100 g, and particularly preferably 70-90 mL/100 g.

Here, in the present specification, the 24M4DBP absorption of recovered carbon black is determined in accordance with ASTM D3493.

The content of the recovered carbon black (B) is preferably 1-100 parts by mass per 100 parts by mass of the rubber component (A), more preferably 5-80 parts by mass, even more preferably 5-50 parts by mass, still more preferably 5-30 parts by mass, and further preferably 5-20 parts by mass. When the content of recovered carbon black (B) is 5 parts by mass or more per 100 parts by mass of the rubber component (A), the effect of increasing the ratio of sustainable materials in rubber products to which the rubber composition is applied is significant, and when it is not more than 50 parts by mass, the fracture resistance of the rubber composition can be more reliably maintained.

### (Carbon black (E) other than recovered carbon black)

The rubber composition of the present embodiment preferably further contains carbon black (E) other than the recovered carbon black (B). By combining carbon black (E) other than recovered carbon black with the recovered carbon black (B), it is possible to further improve the elongation at break (EB) after thermal aging of the rubber composition. As the carbon black (E) other than recovered carbon black, plant-derived carbon black is particularly preferable. Examples of plant-derived carbon black include those derived from castor oil and rosin oil. The grade of the carbon black is not particularly limited, and examples include N134, N110, N220, N234, N219, N339, N330, N326, N351, N550, N762, and the like. As the carbon black (E) other than recovered carbon black, commercial products can be used, and as commercial products of carbon black (E) other than recovered carbon black, products from Asahi Carbon Co., Ltd., Cabot Japan K.K., Tokai Carbon Co., Ltd., Mitsubishi Chemical Corporation, Lion Corporation, Nippon Steel Carbon Co., Ltd., Birla Carbon, and the like can be used. These carbon blacks may be used alone or in combination of two or more.

The nitrogen adsorption specific surface area (N₂SA) of the carbon black (E) other than recovered carbon black is not particularly limited, and can be appropriately adjusted depending on, for example, the tire category to which it is applied, the tire component, target performance, and the like. For example, the nitrogen adsorption specific surface area (N₂SA) of the carbon black (E) other than recovered carbon black is preferably 20 m²/g or more, more preferably 50 m²/g or more, even more preferably 70 m²/g or more, still more preferably 90 m²/g or more, and preferably not more than 200 m²/g, more preferably not more than 150 m²/g, and even more preferably not more than 130 m²/g.

The carbon black (E) other than recovered carbon black preferably has a dibutyl phthalate (DBP) oil absorption of 50-150 mL/100 g. Furthermore, the carbon black (E) other than recovered carbon black preferably has a dibutyl phthalate (DBP) oil absorption of 50-150 mL/100 g and a nitrogen adsorption specific surface area (N₂SA) of 20-130 m²/g, and even more preferably has a dibutyl phthalate (DBP) oil absorption of 80-130 mL/100 g and a nitrogen adsorption specific surface area (N₂SA) of 20-60 m²/g. By combining carbon black (E) having a dibutyl phthalate (DBP) oil absorption of 50-150 mL/100 g and a nitrogen adsorption specific surface area (N₂SA) of 20-130 m²/g with the recovered carbon black (B), it is possible to further improve the elongation at break (EB) after thermal aging of the rubber composition. In addition, by combining carbon black (E) having a dibutyl phthalate (DBP) oil absorption of 80-130 mL/100 g and a nitrogen adsorption specific surface area (N₂SA) of 20-60 m²/g with the recovered carbon black (B), it is possible to further improve the elongation at break (EB) after thermal aging of the rubber composition.

The content of the carbon black (E) other than recovered carbon black is not particularly limited, and can be appropriately adjusted depending on, for example, the tire category to which it is applied, the tire component, target performance, and the like. For example, the content of the carbon black (E) other than recovered carbon black is more preferably 5 parts by mass or more per 100 parts by mass of the rubber component (A), and preferably not more than 100 parts by mass.

The proportion of the recovered carbon black (B) in the total amount (i.e., the total amount of carbon black) of the recovered carbon black (B) and the carbon black (E) other than recovered carbon black is preferably 5-21 mass%. When the proportion of the recovered carbon black (B) in the total amount of carbon black is 5 mass% or more, the effect of increasing the ratio of sustainable materials in the rubber composition and rubber products using the same is significant, and when the proportion of the recovered carbon black (B) in the total amount of carbon black is not more than 21 mass%, it is possible to further improve the elongation at break (EB) after thermal aging of the rubber composition.

### (Quinoline-based antioxidant (C))

The rubber composition of the present embodiment contains a quinoline-based antioxidant (C). The quinoline-based antioxidant (C) is an antioxidant having a quinoline moiety or a derivative moiety thereof (such as a dihydroquinoline moiety). The quinoline-based antioxidant has the effect of improving the heat aging resistance of the rubber composition and improving the elongation at break (EB) after thermal aging.

The quinoline-based antioxidant (C) preferably has a dihydroquinoline moiety, and more preferably has a 1,2-dihydroquinoline moiety.

Specific examples of the quinoline-based antioxidant (C) include a polymer of 2,2,4-trimethyl-1,2-dihydroquinoline (antioxidant TMDQ), 6-ethoxy-2,2,4-trimethyl-1,2-dihydroquinoline (AW), and 6-anilino-2,2,4-trimethyl-1,2-dihydroquinoline. Commercial products can be used as the quinoline-based antioxidant (C), and as commercial products of the antioxidant, products from Ouchi Shinko Chemical Industrial Co., Ltd., Sumitomo Chemical Co., Ltd., Seiko-Chemical Co., Ltd., Flexsys, and the like can be used. These antioxidants may be used alone or in combination of two or more.

The quinoline-based antioxidant (C) preferably contains a polymer of 2,2,4-trimethyl-1,2-dihydroquinoline (antioxidant TMDQ). A quinoline-based antioxidant containing a polymer of 2,2,4-trimethyl-1,2-dihydroquinoline has a high effect of improving the heat aging resistance of the rubber composition and also has the advantage of being less likely to discolor the rubber composition.

Examples of the polymer of 2,2,4-trimethyl-1,2-dihydroquinoline include a dimer, trimer, tetramer, and the like of 2,2,4-trimethyl-1,2-dihydroquinoline.

The content of the quinoline-based antioxidant (C) is preferably in the range of 0.1-5 parts by mass per 100 parts by mass of the rubber component (A). When the content of the quinoline-based antioxidant (C) is 0.1 part by mass or more per 100 parts by mass of the rubber component (A), it is possible to sufficiently ensure the heat aging resistance of the rubber composition and sufficiently improve the elongation at break (EB) after thermal aging. When the content of the quinoline-based antioxidant (C) is not more than 5 parts by mass per 100 parts by mass of the rubber component (A), the influence on other rubber physical properties such as heat buildup is small, making it suitable for tire applications. From the viewpoint of heat aging resistance, the content of the quinoline-based antioxidant (C) is preferably 0.3 part by mass or more per 100 parts by mass of the rubber component (A), more preferably 0.5 part by mass or more, and from the viewpoint of influence on other rubber physical properties, preferably not more than 4 parts by mass per 100 parts by mass of the rubber component (A), and more preferably not more than 3 parts by mass.

### (Antioxidant (F) other than quinoline-based antioxidant)

The rubber composition of the present embodiment preferably further contains an antioxidant (F) other than the quinoline-based antioxidant (C). By including an antioxidant (F) other than the quinoline-based antioxidant together with the quinoline-based antioxidant (C), the respective age-resisting effects are complemented, and the elongation at break (EB) after thermal aging is further improved.

As the antioxidant (F) other than the quinoline-based antioxidant, examples include phenylenediamine-based antioxidants, diphenylamine-based antioxidants, phenol-based antioxidants, quinone-based antioxidants, carbamate-based antioxidants, imidazole-based antioxidants, and the like, among which phenylenediamine-based antioxidants are preferred. The phenylenediamine-based antioxidant is an antioxidant having a phenylenediamine moiety (-NH-C₆H₄-NH-) or a derivative thereof. By including a phenylenediamine-based antioxidant together with the quinoline-based antioxidant (C), the age-resisting effects of each antioxidant complement each other, and the elongation at break (EB) after thermal aging is further improved.

Examples of the phenylenediamine-based antioxidant include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, and the like. As the phenylenediamine-based antioxidant, commercially available products can be used, and examples of such commercial products include those from Ouchi Shinko Chemical Industrial Co., Ltd., Sumitomo Chemical Co., Ltd., Seiko-Chemical Co., Ltd., Flexsys, and the like. These antioxidants may be used alone or in combination of two or more kinds.

The content of the antioxidant (F) other than the quinoline-based antioxidant is not particularly limited and may be appropriately adjusted depending on, for example, the tire category to which it is applied, the tire member, target performance, and the like. For example, the content of the antioxidant (F) other than the quinoline-based antioxidant is preferably 1 part by mass or more, more preferably 1.5 parts by mass or more, and even more preferably 2 parts by mass or more, and preferably 12 parts by mass or less, more preferably 10 parts by mass or less, and even more preferably 8 parts by mass or less, per 100 parts by mass of the rubber component (A).

### (Zinc Oxide (D))

The rubber composition of the present embodiment contains zinc oxide (zinc white) (D). As the zinc oxide (D), not only zinc oxide obtained from zinc ingot but also zinc oxide obtained from recycled zinc or zinc dross (i.e., obtained by recycling) is preferred. Commercially available products can be used as the zinc oxide (D), and examples of such commercial products include those from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like. These commercially available zinc oxides (D) may be used alone or in combination of two or more kinds.

The content of the zinc oxide (D) is not particularly limited and may be appropriately adjusted depending on, for example, the tire category to which it is applied, the tire member, target performance, and the like. For example, the content of the zinc oxide (D) is preferably 1 part by mass or more, more preferably 1.5 parts by mass or more, and even more preferably 1.8 parts by mass or more, and preferably 10 parts by mass or less, more preferably 6 parts by mass or less, even more preferably 4 parts by mass or less, and particularly preferably 2.2 parts by mass or less, per 100 parts by mass of the rubber component (A). When the content of the zinc oxide (D) is 4 parts by mass or less per 100 parts by mass of the rubber component (A), the elongation at break (EB) after thermal aging of the rubber composition is further improved. Further, when the content of the zinc oxide (D) is in the range of 1.5 to 4 parts by mass per 100 parts by mass of the rubber component (A), the vulcanizability of the rubber composition is improved and the elongation at break (EB) after thermal aging is further improved, and when it is in the range of 1.8 to 2.2 parts by mass, the vulcanizability of the rubber composition is further improved and the elongation at break (EB) after thermal aging can be even further improved.

In the rubber composition of the present embodiment, the mass ratio "zinc oxide (D)/quinoline-based antioxidant (C)" of the zinc oxide (D) to the quinoline-based antioxidant (C) is more than 0 and not more than 1.8, and preferably 0.3 or more and not more than 1.8. If the mass ratio of zinc oxide (D)/quinoline-based antioxidant (C) exceeds 1.8, the elongation at break (EB) after thermal aging cannot be sufficiently improved. Further, when the mass ratio of zinc oxide (D)/quinoline-based antioxidant (C) is 0.3 or more, the vulcanizability of the rubber composition is improved, and when it is not more than 1.8, the elongation at break (EB) after thermal aging can be further improved.

The mass ratio "zinc oxide (D)/total amount of antioxidants" of the zinc oxide (D) to the total amount of the quinoline-based antioxidant (C) and the antioxidant (F) other than the quinoline-based antioxidant (i.e., the total amount of antioxidants) is preferably more than 0 and not more than 0.55, and more preferably 0.3 or more and not more than 0.55. When the mass ratio of zinc oxide (D)/total amount of antioxidants is not more than 0.55, the elongation at break (EB) after thermal aging can be further improved. Further, when the mass ratio of zinc oxide (D)/total amount of antioxidants is 0.3 or more, the vulcanizability of the rubber composition is improved, and when it is not more than 0.55, the elongation at break (EB) after thermal aging can be even further improved.

### (Resin)

The rubber composition of the present embodiment may contain a resin. Examples of the resin include terpene-based resins, rosin-based resins, C₅-based resins, C₅/C₉-based resins, C₉-based resins, cyclopentadiene-based resins, aromatic-based resins, coumarone resin, indene resin, coumarone/indene-based resins, olefin-based resins, polyurethane resins, acrylic resins, and the like. These resins may be used alone or in combination of two or more kinds. Among these resins, terpene-based resins, rosin-based resins, C₅-based resins, C₅/C₉-based resins, C₉-based resins, cyclopentadiene-based resins, and aromatic-based resins are preferred, and terpene-based resins and rosin-based resins are particularly preferred. Since terpene-based resins and rosin-based resins are sustainable resins of natural origin, they can further reduce environmental impact and further improve tire performance such as gripping performance on various road surface conditions including dry road surfaces, wet road surfaces, snow-covered road surfaces, and icy road surfaces. Further, C₅-based resins, C₉-based resins, C₅/C₉-based resins, and cyclopentadiene-based resins can improve wear resistance and high fuel efficiency in a well-balanced manner. In addition, aromatic-based resins can improve gripping performance, wear resistance, and rubber strength in a well-balanced manner.

The resin may be hydrogenated, that is, it may be a hydrogenated resin. Further, the resin may be modified to introduce a functional group that interacts with fillers such as carbon black and silica. Examples of such functional groups include amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like.

The terpene-based resin is a solid resin obtained by compounding turpentine oil, which is obtained simultaneously with rosin from pine trees, or a polymerized component separated therefrom, and polymerizing it using a Friedel-Crafts catalyst, and includes β-pinene resin, α-pinene resin, and the like. The terpene-based resin also encompasses terpene/aromatic compound-based resins, and representative examples of such terpene/aromatic compound-based resins include terpene-phenol resin, styrene-terpene resin, and the like. The terpene-phenol resin can be obtained by reacting terpenes and various phenols using a Friedel-Crafts catalyst, or further condensing with formalin. The styrene-terpene resin can be obtained by reacting styrene and terpenes using a Friedel-Crafts catalyst. There is no particular limitation on the terpenes as raw materials, but monoterpene hydrocarbons such as α-pinene and limonene are preferred, those containing α-pinene are more preferred, and α-pinene is particularly preferred.

As the rosin-based resin, examples include natural resin rosin such as gum rosin, tall oil rosin, and wood rosin contained in raw rosin and tall oil, and as modified rosin, rosin derivatives, and modified rosin derivatives, examples include polymerized rosin and its partially hydrogenated rosin; glycerin ester rosin, its partially hydrogenated rosin and completely hydrogenated rosin; pentaerythritol ester rosin, its partially hydrogenated rosin and polymerized rosin; and the like.

As the C₅-based resin, examples include aliphatic petroleum resins obtained by (co)polymerizing a C₅ fraction obtained by thermal cracking of naphtha in the petrochemical industry. The C₅ fraction usually contains olefinic hydrocarbons such as 1-pentene, 2-pentene, 2-methyl-1-butene, 2-methyl-2-butene, 3-methyl-1-butene, and diolefinic hydrocarbons such as 2-methyl-1,3-butadiene, 1,2-pentadiene, 1,3-pentadiene, 3-methyl-1,2-butadiene, and the like.

The C₅/C₉-based resin refers to a C₅/C₉-based synthetic petroleum resin, and examples of the C₅/C₉-based resin include solid polymers obtained by polymerizing petroleum-derived C₅-C₁₁ fractions using Friedel-Crafts catalysts such as AlCl₃ and BF₃, and more specifically, copolymers mainly composed of styrene, vinyltoluene, α-methylstyrene, indene, and the like. As the C₅/C₉-based resin, a resin containing a small amount of C₉ or higher components is preferred from the viewpoint of compatibility with the rubber component. Here, "containing a small amount of C₉ or higher components" means that the content of C₉ or higher components in the total amount of the resin is less than 50 mass%, preferably 40 mass% or less.

The C₉-based resin refers to a C₉-based synthetic petroleum resin, and refers to a solid polymer obtained by polymerizing a C₉ fraction using a Friedel-Crafts catalyst such as AlCl₃ or BF₃. Examples of the C₉-based resin include copolymers mainly composed of indene, α-methylstyrene, vinyltoluene, and the like.

The cyclopentadiene-based resin refers to a resin containing a unit derived from a cyclopentadiene-based monomer as a monomer unit. Examples of the cyclopentadiene-based resin include homopolymers of cyclopentadiene-based monomers, copolymers of two or more cyclopentadiene-based monomers, copolymers of cyclopentadiene-based monomers and other monomers, and the like. Examples of the cyclopentadiene-based monomer include cyclopentadiene, dicyclopentadiene, tricyclopentadiene, and the like, among which dicyclopentadiene is preferred, that is, as the cyclopentadiene-based resin, dicyclopentadiene-based resin is preferred. The dicyclopentadiene-based resin refers to a resin obtained by polymerizing dicyclopentadiene using, for example, a Friedel-Crafts catalyst such as AlCl₃ or BF₃. Examples of the dicyclopentadiene-based resin include homopolymers of dicyclopentadiene, copolymers of dicyclopentadiene and aromatic monomers, copolymers of dicyclopentadiene and C₉ fractions (vinyltoluene, indene, etc.), and the like.

The aromatic-based resin refers to a resin containing a unit derived from an aromatic monomer as a monomer unit. Examples of the aromatic-based resin include homopolymers of aromatic monomers, copolymers of two or more aromatic monomers, copolymers of aromatic monomers and other monomers, and the like. Examples of the aromatic monomer include styrene-based monomers such as styrene, o-methylstyrene, m-methylstyrene, p-methylstyrene, α-methylstyrene, p-methoxystyrene, p-tert-butylstyrene, o-chlorostyrene, m-chlorostyrene, p-chlorostyrene, p-phenylstyrene; phenol-based monomers such as phenol, alkylphenol, alkoxyphenol; naphthol-based monomers such as naphthol, alkylnaphthol, alkoxynaphthol; and the like.

The resin preferably has a softening point of 30°C or higher, more preferably 60°C or higher, even more preferably 80°C or higher, still more preferably higher than 110°C, even more preferably 116°C or higher, even more preferably 120°C or higher, even more preferably 123°C or higher, and still more preferably 127°C or higher. From the viewpoint of processability, the resin preferably has a softening point of 160°C or lower, more preferably 150°C or lower, even more preferably 145°C or lower, still more preferably 141°C or lower, and still more preferably 136°C or lower.

Note that in the present specification, the softening point of the resin is the temperature at which the ball drops, measured using a ring-and-ball softening point measuring device in accordance with the softening point specified in JIS K 6220-1:2015 (ISO 28641:2010).

As the resin, commercially available products can be used, and examples of such commercial products include those from ENEOS Corporation, Arakawa Chemical Industries, Ltd., ExxonMobil, Kraton Corporation, Yasuhara Chemical Co., Ltd., Maruzen Petrochemical Co., Ltd., Sumitomo Bakelite Co., Ltd., Tosoh Corporation, Rutgers Chemicals, BASF, Kraton Polymers LLC, Nitto Chemical Industry Co., Ltd., Nippon Shokubai Co., Ltd., Taoka Chemical Co., Ltd., and the like.

The content of the resin is not particularly limited and may be appropriately adjusted depending on, for example, the tire category to which it is applied, the tire member, target performance, and the like. For example, the content of the resin is preferably in the range of 5 to 100 parts by mass, and more preferably in the range of 10 to 60 parts by mass, per 100 parts by mass of the rubber component (A).

### (Silica)

The rubber composition of the present embodiment may contain silica. Examples of the silica include wet silica (hydrous silicate), dry silica (anhydrous silicate), calcium silicate, aluminum silicate, and the like, among which wet silica is preferred due to its high content of silanol groups. These silicas may be used alone or in combination of two or more kinds. As the silica, commercially available products can be used, and examples of such commercial products include those from Tosoh Silica Corporation, Evonik, Solvay, Solvay Japan Co., Ltd., Tokuyama Corporation, and the like.

From the viewpoint of reducing environmental impact, silica derived from plant-based silicate is preferred as the silica. Such plant-based silicate is present, for example, in plants of the classes Bryopsida, Pteridophyta, Equisetopsida, Cucurbitaceae, Urticaceae, and Poaceae. Among these plants, Poaceae plants are preferred. Examples of Poaceae plants include rice, bamboo, sugarcane, and the like, among which rice is preferred. Since rice is widely cultivated for food, it can be locally procured in a wide area, and since rice husks are generated in large quantities as industrial waste, it is easy to secure the quantity. Therefore, from the viewpoint of ease of procurement, silica derived from rice husks (hereinafter also referred to as "rice husk silica") is particularly preferred as the silica. By using rice husk silica, rice husks, which are industrial waste, can be effectively utilized, and since raw materials can be locally procured near the tire manufacturing plant, energy and cost for transportation and storage can be reduced, and from various viewpoints, it is preferable in terms of the environment. The rice husk silica may be a powder of rice husk charcoal obtained by carbonizing rice husks by heating, or may be a precipitated silica produced by preparing an alkali silicate aqueous solution by extracting rice husk ash generated when rice husks are burned as fuel in a biomass boiler with alkali, and producing by a wet process using the alkali silicate aqueous solution. The method for producing the rice husk charcoal is not particularly limited, and various known methods can be used, for example, rice husk charcoal can be obtained by pyrolyzing rice husks by steaming in a kiln. The rice husk charcoal thus obtained can be pulverized using a known pulverizer (for example, a ball mill), and by selecting and classifying to a predetermined particle size range, a powder of rice husk charcoal can be obtained. Further, the precipitated silica derived from rice husks can be produced by the method described in JP 2019-38728 A.

In addition, from the viewpoint of reducing environmental impact, it is also preferable to use silica produced by recycling, such as silica manufactured by extracting silicate components from silicon wafer scraps used as raw materials for semiconductors or from glass bottles, and using them in production.

The silica preferably has a nitrogen adsorption specific surface area (N₂SA) of 50 m²/g or more, more preferably 100 m²/g or more, still more preferably 150 m²/g or more, and preferably 350 m²/g or less, more preferably 250 m²/g or less, still more preferably 230 m²/g or less, and even more preferably 200 m²/g or less.

It should be noted that, in the present specification, the nitrogen adsorption specific surface area (N₂SA) of silica is a value measured by the BET method in accordance with ASTM D3037-93.

The content of the silica can be appropriately adjusted, for example, depending on the target tire category, tire member, target performance, and the like. For example, the content of silica is preferably 1 part by mass or more, more preferably 3 parts by mass or more, and still more preferably 5 parts by mass or more, per 100 parts by mass of the rubber component (A). Also, it is preferably 100 parts by mass or less, and more preferably 50 parts by mass or less.

The proportion of silica in the total content of silica and carbon black is not particularly limited and can be appropriately adjusted, for example, depending on the target tire category, tire member, target performance, and the like. For example, the proportion of silica in the total content of silica and carbon black may be any proportion from 0 mass% to 100 mass%, but for developing the black color as a tire, 5 mass% or more is preferable.

### (Silane Coupling Agent)

When the rubber composition of the present embodiment contains silica, it is preferable that the rubber composition further contains a silane coupling agent in order to enhance the effect of the silica. Examples of such silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, and the like. Commercially available products can be used as the silane coupling agent, and examples of such commercial products include those from Evonik, Momentive, Shin-Etsu Silicone Co., Ltd., Dow Corning Toray Co., Ltd., Tokyo Chemical Industry Co., Ltd., Azumax Co., Ltd., and the like. These silane coupling agents may be used alone or in combination of two or more.

It is also possible to use bioethanol as a raw material for the silane coupling agent. Bioethanol is produced mainly from saccharides and/or cellulose as biological resources, and other biological resources such as proteins, lipids, amino acids, and the like cannot be effectively utilized. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of ethanol derived from biological resources (bioethanol) as raw materials for the silane coupling agent, or to use a combination of ethanol derived from biological resources (bioethanol), ethanol derived from recycled resources, and ethanol derived from fossil resources. In this way, it is possible to effectively utilize a wide range of biological resources such as sugars, proteins, and lipids, as well as recycled resources, without relying on a single biological resource, and to take environmental considerations into account according to the manufacturing situation.

The content of the silane coupling agent can be appropriately adjusted, for example, depending on the target tire category, tire member, target performance, and the like. For example, the content of the silane coupling agent is preferably 1 part by mass or more, more preferably 6 parts by mass or more, and still more preferably 8 parts by mass or more, per 100 parts by mass of the silica, and preferably 20 parts by mass or less, more preferably 15 parts by mass or less, still more preferably 12 parts by mass or less, and even more preferably 10 parts by mass or less.

### (Rubber Powder)

The rubber composition of the present embodiment may contain rubber powder. The rubber powder may be obtained by pulverizing used rubber products such as used tires, and, as desired, removing reinforcing members such as steel materials and fibers, dust, glass, sand, stones, and the like, or by preparing a newly vulcanized rubber composition for the purpose of producing rubber powder and pulverizing it. For example, rubber powder can be obtained from vulcanized rubber by the method described in "Rubber Chemistry And Technology." In the process of pulverizing vulcanized rubber to obtain rubber powder, mechanical treatment or low-temperature treatment may be used. For example, in mechanical treatment, various crushing devices such as cracker mills and granulators can be used to mechanically pulverize vulcanized rubber into fine particles. In low-temperature treatment, finely chopped vulcanized rubber is frozen at extremely low temperatures and then pulverized into fine particles. For removal of steel materials, magnetic separators and the like can be used, and for removal of fibers, air classifiers and the like can be used. Commercially available products can also be used as the rubber powder, and examples of such commercial products include products from Global Corporation or Nantong Huili Rubber Corporation. From the viewpoint of reducing environmental impact, it is preferable to use rubber powder obtained by pulverizing used rubber products such as used tires. The rubber powder may be used alone or in combination of two or more types.

The composition of the rubber powder is not particularly limited and depends on the composition of the vulcanized rubber of the used rubber product (used tire) used as the raw material. In one embodiment, the rubber powder contains a rubber component, carbon black, silica, and the like. The rubber component, carbon black, silica, and the like contained in the rubber powder may be the same as or different from the rubber component, carbon black, silica, and the like that may be contained in the rubber composition of the present embodiment described above.

The rubber powder preferably has a volume average particle diameter of 1000 µm or less, more preferably 500 µm or less, still more preferably 200 µm or less, and even more preferably 100 µm or less. The smaller the volume average particle diameter of the rubber powder, the better, and the lower limit is not particularly limited.

It should be noted that, in the present specification, the volume average particle diameter is measured using a laser diffraction particle size distribution measuring device, and, for example, can be measured using "CAPA500" manufactured by HORIBA, Ltd.

The rubber powder preferably has a 60-mesh sieve residue of less than 1 mass%, more preferably 0.5 mass% or less, still more preferably 0.1 mass% or less, and the lower limit is not particularly limited. Also, the rubber powder preferably has an 80-mesh sieve residue of less than 10 mass%, more preferably 1 mass% or less, still more preferably 0.5 mass% or less, and the lower limit is not particularly limited.

It should be noted that, in the present specification, the sieve residue is measured in accordance with ASTM D5644-01.

The rubber powder preferably has an acetone extract content of 12 mass% or less, more preferably 11 mass% or less, still more preferably 10 mass% or less, and preferably 1 mass% or more, more preferably 2 mass% or more, and still more preferably 3 mass% or more.

It should be noted that, in the present specification, the acetone extract content in the rubber powder refers to the acetone extract content (%) determined by the acetone extraction method in accordance with JIS K6350.

The content of the rubber powder is not particularly limited and can be appropriately adjusted, for example, depending on the target tire category, tire member, target performance, and the like. For example, the content of the rubber powder is preferably 1 part by mass or more, more preferably 2 parts by mass or more, still more preferably 3 parts by mass or more, per 100 parts by mass of the rubber component (A), and preferably 200 parts by mass or less, more preferably 150 parts by mass or less, still more preferably 100 parts by mass or less, more preferably 50 parts by mass or less, more preferably 30 parts by mass or less, still more preferably 15 parts by mass or less, even more preferably 10 parts by mass or less, and particularly preferably 5 parts by mass or less.

### (Liquid Softener)

The rubber composition of the present embodiment may contain a liquid softener. Here, "liquid softener" refers to a compounding agent that is liquid at 25°C (room temperature) and has the function of softening the rubber composition. The liquid softener is not particularly limited, and examples include oils, liquid polymers, and the like, with oils being preferred among these. These liquid softeners may be used alone or in combination of two or more.

The term "oil" refers to a general term for extender oil contained in the rubber component and liquid oil components added as compounding agents in the rubber composition, and examples include vegetable oils, process oils, oils obtained by recycling vegetable oils or process oils, or mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, Cocos nucifera oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffin process oil, aromatic process oil, naphthenic process oil, and the like. Commercially available products can be used as the oil, and examples of such commercial products include products from Idemitsu Kosan Co., Ltd., SANKYO YUKA KOGYO K.K., ENEOS Corporation, Orisoy, H&R, Toyokuni Oil Co., Ltd., Nisshin OilliO Group, Ltd., and the like. These oils may be used alone or in combination of two or more.

As the liquid polymer, a liquid diene-based polymer is preferred. Examples of such liquid diene-based polymers include liquid styrene-butadiene copolymer (liquid SBR), liquid polybutadiene (liquid BR), liquid polyisoprene (liquid IR), liquid styrene-isoprene copolymer (liquid SIR), liquid styrene-butadienestyrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and their terminals or main chains may be modified with functional groups (polar groups). These liquid polymers may be used alone or in combination of two or more.

The content of the liquid softener is not particularly limited and can be appropriately adjusted, for example, depending on the target tire category, tire member, target performance, and the like. For example, the content of the liquid softener is preferably 5 parts by mass or more, more preferably 10 parts by mass or more, per 100 parts by mass of the rubber component (A), and preferably 100 parts by mass or less, more preferably 70 parts by mass or less, still more preferably 50 parts by mass or less, and even more preferably 30 parts by mass or less.

### (Wax)

The rubber composition of the present embodiment may contain wax. Examples of such wax include, for example, natural waxes such as plant-based waxes and animal-based waxes; petroleum.-based waxes such as paraffin wax and microcrystalline wax; synthetic waxes such as polymers of ethylene, polymers of propylene, and the like. Commercially available products can be used as the wax, and examples of such commercial products include products from Seiko-Chemical Co., Ltd., Nippon Seiro Co., Ltd., Ouchi Shinko Chemical Industrial Co., Ltd., and the like. These waxes may be used alone or in combination of two or more.

The content of the wax is not particularly limited and can be appropriately adjusted, for example, depending on the target tire category, tire member, target performance, and the like. For example, the content of the wax is preferably 0.5 part by mass or more, more preferably 1 part by mass or more, per 100 parts by mass of the rubber component (A), and preferably 10 parts by mass or less, more preferably 6 parts by mass or less.

### (Stearic Acid)

The rubber composition of the present embodiment may contain stearic acid. Commercially available products can be used as the stearic acid, and examples of such commercial products include products from NOF Corporation, Kao Corporation, FUJIFILM Wako Pure Chemical Corporation, Chiba Fatty Acid Co., Ltd., and the like. These commercially available stearic acids may be used alone or in combination of two or more.

The content of the stearic acid is not particularly limited and can be appropriately adjusted, for example, depending on the target tire category, tire member, target performance, and the like. For example, the content of the stearic acid is preferably 1 part by mass or more, more preferably 2 parts by mass or more, per 100 parts by mass of the rubber component (A), and preferably 10 parts by mass or less, more preferably 6 parts by mass or less.

### (Sulfur)

The rubber composition of the present embodiment preferably contains sulfur. As the sulfur, those derived from fossil resources, those derived from recycled resources, and those obtained by processing biological resource-derived materials can be used, and from the viewpoint of reducing environmental impact, it is particularly preferable to use sulfur obtained from waste derived from biological resources. As a method for obtaining sulfur from waste derived from biological resources, for example, the method described in the above-mentioned Japanese Patent Application No. 2022-140390 can be used. As the sulfur, powdered sulfur, precipitated sulfur, colloidal sulfur, insoluble sulfur, highly dispersible sulfur, soluble sulfur, and the like, which are generally used as crosslinking agents in the rubber industry, can also be used. Commercially available products can be used as the sulfur, and examples of such commercial products include products from Tsurumi Chemical Industry Co., Ltd., Hosoi Chemical Industry Co., Ltd., Karuizawa Sulfur Co., Ltd., Shikoku Chemicals Corp., Flexsys, and the like. These types of sulfur may be used alone or in combination of two or more.

The content of the sulfur is not particularly limited and can be appropriately adjusted, for example, depending on the target tire category, tire member, target performance, and the like. For example, the content of the sulfur is preferably 0.3 part by mass or more, more preferably 0.5 part by mass or more, still more preferably 0.8 part by mass or more, per 100 parts by mass of the rubber component (A), and preferably 8 parts by mass or less, more preferably 5 parts by mass or less.

### (Vulcanization Accelerator)

The rubber composition of the present embodiment preferably contains a vulcanization accelerator. The vulcanization accelerator can be used regardless of whether it is derived from fossil resources, recycled resources, or biological resources, but from the viewpoint of reducing environmental impact, it is preferable that it is derived from biological resources. The vulcanization accelerator derived from biological resources can be obtained, for example, by the method disclosed in JP 2005-139239 A.

Examples of the vulcanization accelerator include sulfenamide-based vulcanization accelerators such as N-cyclohexyl-2-benzothiazolylsulfenamide (CBS), N,N-dicyclohexyl-2-benzothiazolylsulfenamide, N-tert-butyl-2-benzothiazolylsulfenamide (TBBS), N-oxyethylene-2-benzothiazolesulfenamide, N,N'-diisopropyl-2-benzothiazolesulfenamide; guanidine-based vulcanization accelerators such as 1,3-diphenylguanidine (DPG), 1,3-di-o-tolylguanidine, o-tolylbiguanidine; thiazole-based vulcanization accelerators such as 2-mercaptobenzothiazole (M), di-2-benzothiazolyl disulfide (MBTS, DM); thiuram-based vulcanization accelerators such as tetramethylthiuram disulfide (TMTD), tetrastearylthiuram disulfide, tetrabenzylthiuram disulfide (TBzTD), tetrakis(2-ethylhexyl)thiuram disulfide (TOT-N); and the like. Commercially available products can be used as the vulcanization accelerator, and examples of such commercial products include products from Ouchi Shinko Chemical Industrial Co., Ltd., Sumitomo Chemical Co., Ltd., and the like. These vulcanization accelerators may be used alone or in combination of two or more.

The content of the vulcanization accelerator is not particularly limited and may be appropriately adjusted, for example, according to the tire category, tire member, target performance, and the like to which it is to be applied. For example, the content of the vulcanization accelerator is preferably 1 part by mass or more, more preferably 2 parts by mass or more, and still more preferably 3 parts by mass or more, and preferably 8 parts by mass or less, more preferably 6 parts by mass or less, and still more preferably 5.5 parts by mass or less, per 100 parts by mass of the rubber component (A).

### (Cellulose Nanofiber)

The rubber composition of the present embodiment may contain cellulose nanofiber (CNF). By blending cellulose nanofiber into the rubber composition, the rubber composition can be reinforced. As the cellulose nanofiber, a modified cellulose nanofiber is preferred, and the modified cellulose nanofiber is a fine fiber made from modified cellulose as a raw material. The fiber diameter of the cellulose nanofiber is not particularly limited, but is about 3 to 500 nm. The average fiber diameter and average fiber length of the cellulose nanofiber can be obtained by averaging the fiber diameters and fiber lengths obtained from observations of each fiber using a scanning electron microscope (SEM), atomic force microscope (AFM), or transmission electron microscope (TEM). The cellulose nanofiber can be obtained by fibrillating cellulose. Further, the average fiber length and average fiber diameter of the fine fibers can be adjusted by oxidation treatment and fibrillation treatment.

The raw material for the cellulose nanofiber only needs to contain cellulose and is not particularly limited, but examples include plants (for example, wood, bamboo, hemp, jute, kenaf, agricultural residue, cloth, pulp (unbleached softwood kraft pulp (NUKP), bleached softwood kraft pulp (NBKP), unbleached hardwood kraft pulp (LUKP), bleached hardwood kraft pulp (LBKP), bleached kraft pulp (BKP), unbleached softwood sulfite pulp (NUSP), bleached softwood sulfite pulp (NBSP), thermomechanical pulp (TMP), recycled pulp, waste paper, etc.)), animals (for example, tunicates), algae, microorganisms (for example, acetic acid bacteria (Acetobacter)), and microbial products. These cellulose raw materials may be used alone or in combination of two or more.

The content of the cellulose nanofiber is not particularly limited and may be appropriately adjusted, for example, according to the tire category, tire member, target performance, and the like to which it is to be applied. For example, the content of the cellulose nanofiber is preferably in the range of 1 to 100 parts by mass, more preferably in the range of 5 to 70 parts by mass, and still more preferably in the range of 10 to 40 parts by mass, per 100 parts by mass of the rubber component (A).

### (Others)

The rubber composition of the present embodiment may further contain, in addition to the above components, various additives generally used in the tire industry, such as fillers including calcium carbonate, talc, alumina, clay, aluminum hydroxide, mica, and the like; organic peroxides; and so on. The content of these additives is not particularly limited and may be appropriately adjusted, for example, according to the tire category, tire member, target performance, and the like to which it is to be applied, and is preferably in the range of 0.1 to 200 parts by mass per 100 parts by mass of the rubber component (A).

### (Method for Producing Rubber Composition)

The method for producing the rubber composition of the present embodiment is not particularly limited, but for example, it can be produced by blending the rubber component (A) with the recovered carbon black (B), the quinoline-based antioxidant (C), the zinc oxide (D), and, as necessary, various components selected as appropriate, followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus may be appropriately selected according to the purpose. Examples of kneading apparatuses include, in general, Banbury mixers, intermixes, kneaders, rolls, and the like, which are used for kneading rubber compositions.

The conditions for warming are also not particularly limited, and various conditions such as warming temperature, warming time, and warming apparatus may be appropriately selected according to the purpose. As the warming apparatus, a warming roll machine or the like, which is generally used for warming rubber compositions, may be used.

The conditions for extrusion are also not particularly limited, and various conditions such as extrusion time, extrusion speed, extrusion apparatus, and extrusion temperature may be appropriately selected according to the purpose. As the extrusion apparatus, an extruder or the like, which is generally used for extruding rubber compositions, may be used. The extrusion temperature can be determined as appropriate.

The apparatus, method, and conditions for vulcanization are also not particularly limited and may be appropriately selected according to the purpose. As the apparatus for vulcanization, a molding vulcanizer using a mold, which is generally used for vulcanizing rubber compositions, may be used. As for the vulcanization conditions, the temperature is, for example, about 100°C to 190°C.

### (Applications)

The rubber composition of the present embodiment can be applied to various constituent members of a tire, for example, tread (cap tread, base tread, under tread), cushion rubber, shoulder, side rubber, clinch, bead filler, coating rubber for carcass, insulation, chafer, inner liner, and the like, and can also be used for side reinforcing layers of run flat tires and the like. In addition to tires, the rubber composition of the present embodiment can also be applied to rubber crawlers, seismic isolation rubber, hoses, and the like. Among these, the rubber composition of the present embodiment is particularly suitable for use as side rubber, which reaches a high temperature during running and is required to have high durability even after thermal aging, because the elongation at break (EB) after thermal aging is improved.

### <Side Rubber>

The side rubber of the present embodiment is characterized by being composed of the above-described rubber composition.

Since the side rubber of the present embodiment is composed of the above-described rubber composition, the ratio of sustainable materials is improved and the durability after thermal aging is also improved.

### <Tire>

The tire of the present embodiment is characterized by comprising the above-described side rubber.

Since the tire of the present embodiment comprises the above-described side rubber, the ratio of sustainable materials is improved and the durability after thermal aging is also improved.

Next, an embodiment of the tire of the present disclosure will be described in detail with reference to the drawings.

FIG. 1 is a cross-sectional view of an embodiment of the tire of the present disclosure. The tire 1 of the present embodiment illustrated in FIG. 1 includes a pair of bead portions 2, a pair of sidewall portions 3, and a tread portion 4 continuous with both sidewall portions 3, and further comprises a carcass 6 extending in a toroidal shape between bead cores 5 embedded in each of the pair of bead portions 2, and a belt 7 disposed on the tire radial outer side of the crown portion of the carcass 6.

The carcass 6 of the tire 1 illustrated in FIG. 1 is composed of a single carcass ply formed by coating a plurality of cords arranged in parallel with coating rubber, and the carcass 6 includes a main body portion extending in a toroidal shape between the pair of bead cores 5, and a turn-up portion wound up radially outward from the inside to the outside in the tire width direction around each bead core 5. However, in the tire of the present disclosure, the number of plies and structure of the carcass are not limited thereto.

Further, in the tire 1 illustrated in FIG. 1, a belt 7 composed of two belt layers is disposed on the tire radial outer side of the crown portion of the carcass 6. The belt layers are generally rubberized layers of cords (preferably steel cords) extending obliquely with respect to the tire equatorial plane, and the two belt layers are laminated so that the cords constituting the belt layers cross each other across the tire equatorial plane to form the belt 7. Although the belt 7 in the drawing is composed of two belt layers, in the tire of the present disclosure, the number of belt layers constituting the belt may be three or more.

The tire 1 of the present embodiment is provided with side rubber 8 on the pair of sidewall portions 3, and the above-described rubber composition of the present embodiment is used for the side rubber 8. Therefore, in the tire 1 of the present embodiment, the ratio of sustainable materials is improved and the durability after thermal aging is also improved.

The tire of the present embodiment can be produced by using the above-described rubber composition for the side rubber by a conventional method. For example, the tire of the present embodiment may be obtained by molding using an unvulcanized rubber composition according to the type of tire to be applied, followed by vulcanization, or by molding using a semi-vulcanized rubber that has undergone a preliminary vulcanization step or the like, followed by main vulcanization. The tire of the present embodiment is preferably a pneumatic tire, and as the gas to be filled in the pneumatic tire, in addition to ordinary air or air with adjusted oxygen partial pressure, inert gases such as nitrogen, argon, and helium can be used.

### EXAMPLES

The present disclosure will be further described in detail below with reference to examples, but the present disclosure is not limited to the following examples.

### <Preparation of Rubber Composition>

Rubber compositions of the examples and comparative examples were prepared according to the formulations shown in Table 1. For each obtained rubber composition, the total mass ratio of materials derived from biological resources (biomass resources) and materials derived from recycled resources was calculated to determine the sustainable material ratio.

Furthermore, for the obtained rubber compositions, the elongation at break (EB) after thermal aging was evaluated by the following method. The results are presented in Table 1.

### <Evaluation of Elongation at Break (EB) after Thermal Aging>

The rubber composition was vulcanized to prepare vulcanized rubber test pieces. Next, the vulcanized rubber test pieces were left at 100°C for 48 hours to cause thermal aging, and a tensile test was conducted on the thermally aged test pieces in accordance with JIS K 6251 to measure the elongation at break (EB) after thermal aging. The results are indicated as an index, with the elongation at break (EB) after thermal aging of Comparative Example 1 (Comp. Ex. 1) set to 100. The larger the index value, the greater the elongation at break (EB) after thermal aging.

**[Table 1]**

| | | | | Comp. Ex. 1 | Comp. Ex. 2 | Comp. Ex. 3 | Ex. 1 | Ex. 2 | Ex. 3 | Ex. 4 | Ex. 5 | Ex. 6 |
|---|---|---|---|---|---|---|---|---|---|---|---|---|
| Formulation | Rubber component | Natural rubber | Parts by mass | 40 | 40 | 40 | 40 | 29 | 40 | 40 | 40 | 40 |
| | | Butadiene rubber *1 | | 60 | 60 | 60 | 60 | 60 | 60 | 60 | 60 | 60 |
| | | Styrene-butadiene rubber *2 | | - | - | - | - | 11 | - | - | - | - |
| | Carbon black | Unused carbon black *3 | | 35 | 30 | 30 | 30 | 30 | 30 | 30 | 30 | 26.25 |
| | | Recovered carbon black *4 | | - | 7.5 | 7.5 | 7.5 | 7.5 | 7.5 | 7.5 | 7.5 | 13.13 |
| | Antioxidant | Quinoline-based antioxidant *5 | | 1 | 1.5 | - | 1.5 | 1.5 | 1.5 | 1.5 | 2 | 2 |
| | | Phenylenediamine-based antioxidant *6 | | 3 | - | 3 | 3 | 3 | 3 | 3 | 3 | 3 |
| | Zinc oxide | | | 3 | 2 | 2 | 2 | 2 | 1.5 | 1.2 | 2 | 2 |
| | Fatty acid | | | 2 | 2 | 2 | 2 | 2 | 2 | 2 | 2 | 2.6 |
| | Other chemicals *7 | | | 8.9 | 8.9 | 8.9 | 8.9 | 8.9 | 8.9 | 8.9 | 8.9 | 8.9 |
| Mass ratio of zinc oxide/quinoline-based antioxidant | | | - | 3.0 | 1.3 | - | 1.3 | 1.3 | 1.0 | 0.8 | 1.0 | 1.0 |
| Mass ratio of zinc oxide/total amount of antioxidants | | | - | 0.75 | 1.33 | 0.67 | 0.44 | 0.44 | 0.33 | 0.27 | 0.40 | 0.40 |
| Evaluation | Total parts by mass in formulation | | Parts by mass | 152.9 | 151.9 | 153.4 | 154.9 | 154.9 | 154.4 | 154.1 | 155.4 | 157.88 |
| | Parts by mass of sustainable materials in formulation | | Parts by mass | 40 | 47.5 | 47.5 | 47.5 | 36.5 | 47.5 | 47.5 | 47.5 | 53.13 |
| | Ratio of sustainable materials | | Mass% | 26 | 31 | 31 | 31 | 24 | 31 | 31 | 31 | 34 |
| | Elongation at break (EB) after thermal aging | | Index | 100 | 95 | 97 | 104 | 102 | 104 | 104 | 108 | 101 |

| | | | | | | | | | | | | |
|---|---|---|---|---|---|---|---|---|---|---|---|---|
| *1 Butadiene rubber: Manufactured by UBE Elastomer Co., Ltd., trade name "BR150L" *2 Styrene-butadiene rubber: Manufactured by Sumitomo Chemical Co., Ltd., trade name "SBR1502", styrene content 23.5% *3 Unused carbon black: Manufactured by Asahi Carbon Co., Ltd., trade name "N550", nitrogen adsorption specific surface area (N₂SA) = 40 m²/g, DBP oil absorption = 121 mL/100 g *4 Recovered carbon black: Manufactured by Enrestec Co., Ltd., trade name "PB365", ash content = 17 mass% *5 Quinoline-based antioxidant: Manufactured by Seiko-Chemical Co., Ltd., trade name "Nonflex RD", 2,2,4-trimethyl-1,2-dihydroquinoline polymer *6 Phenylenediamine-based antioxidant: Manufactured by Ouchi Shinko Chemical Industrial Co., Ltd., trade name "Nocrac 6C", N-(1,3-dimethylbutyl)-N'-phenyl-p-phenylenediamine *7 Other chemicals: Total amount of sulfur, vulcanization accelerator, resin, oil, and wax; the ratio is the same in the comparative examples and examples | | | | | | | | | | | | |

From Table 1, it can be seen that the rubber compositions of the examples according to the present disclosure have an improved ratio of sustainable materials and improved elongation at break (EB) after thermal aging.

### INDUSTRIAL APPLICABILITY

The rubber composition of the present disclosure can be used for rubber products such as tires, rubber crawlers, seismic isolation rubber, hoses, and the like, and is particularly suitable as side rubber for tires.

### REFERENCE SIGNS LIST

1: Tire
2: Bead portion
3: Sidewall portion
4: Tread portion
5: Bead core
6: Carcass
7: Belt
8: Side rubber

## Claims

1. A rubber composition comprising a rubber component (A), recovered carbon black (B), a quinoline-based antioxidant (C), and zinc oxide (D), wherein a mass ratio "zinc oxide (D)/quinoline-based antioxidant (C)" of the zinc oxide (D) to the quinoline-based antioxidant (C) is more than 0 and not more than 1.8.

2. The rubber composition according to claim 1, wherein the recovered carbon black (B) is obtained by pyrolysis of a vulcanized rubber product containing carbon black.

3. The rubber composition according to claim 1, wherein the recovered carbon black (B) has an ash content of not more than 20 mass%.

4. The rubber composition according to claim 1, further comprising carbon black (E) other than the recovered carbon black.

5. The rubber composition according to claim 4, wherein a proportion of the recovered carbon black (B) in a total amount of the recovered carbon black (B) and the carbon black (E) other than the recovered carbon black is 5 mass% to 21 mass%.

6. The rubber composition according to claim 4, wherein the carbon black (E) other than the recovered carbon black has a dibutyl phthalate (DBP) oil absorption of 50 mL/100 g to 150 mL/100 g and a nitrogen adsorption specific surface area (N₂SA) of 20 m²/g to 130 m²/g.

7. The rubber composition according to claim 1, wherein the rubber component (A) includes natural rubber.

8. The rubber composition according to claim 7, wherein the rubber component (A) further includes butadiene rubber.

9. The rubber composition according to claim 1, wherein content of the zinc oxide (D) is not more than 4 parts by mass per 100 parts by mass of the rubber component (A).

10. The rubber composition according to claim 1, further comprising an antioxidant (F) other than the quinoline-based antioxidant.

11. The rubber composition according to claim 10, wherein the antioxidant (F) other than the quinoline-based antioxidant is a phenylenediamine-based antioxidant.

12. The rubber composition according to claim 10, wherein a mass ratio "zinc oxide (D)/total amount of antioxidants" of the zinc oxide (D) to a total amount of the quinoline-based antioxidant (C) and the antioxidant (F) other than the quinoline-based antioxidant is more than 0 and not more than 0.55.

13. A side rubber comprising the rubber composition according to claim 1.

14. A tire comprising the side rubber according to claim 13.
